# EUROPEAN PATENT SPECIFICATION

(11) **EP 4 543 696 B1**
(45) Date of publication and mention of the grant of the patent: **24.09.2025**
(21) Application number: 23744299.1
(22) Date of filing: 27.06.2023
(51) Int. Cl.: B60C 25/05, B60B 30/08, B60C 25/138, G01M 1/04, G01M 17/02

(54) **WHEEL CLAMP SYSTEM FOR TIRE CHANGING MACHINE**
RADKLEMMSYSTEM FÜR REIFENWECHSELMASCHINE
SYSTÈME DE SERRAGE DE ROUE POUR MACHINE DE CHANGEMENT DE PNEUMATIQUE

(30) Priority: 15.07.2022 US 202263389634 P
(43) Date of publication of application: 30.04.2025
(73) Proprietor: HUNTER ENGINEERING COMPANY, St. Louis, MO 63044 (US)
(72) Inventor: OLSEN, Michael, Saint Louis, Missouri 63367 (US); DIERKING, Joshua, Leslie, Missouri 63056 (US)
(74) Representative: Ström & Gulliksson AB
(86) International application number: PCT/US2023/026316
(87) International publication number: WO 2024/015213

(56) References cited:
- WO-A1-2021/004949
- IT-A1- MI20 102 213
- US-A1- 2019 291 519

## Description

### BACKGROUND OF THE INVENTION

The present invention relates generally to tire changing machines, system for mounting and demounting tires from wheel rims, as well as methods for doing same, and more specifically to a tire changing machine wheel clamp assembly configured to secure a wheel rim or wheel assembly to a spindle shaft during a tire or wheel service procedure.

The process of removing a tire from a wheel rim and replacing it with another tire, referred to herein as tire changing, can be difficult and require the exertion of significant forces to pull, distort, and displace the tire relative to the wheel rim. In response to such difficulties, machines have been developed to facilitate the tire changing process. These tire changing machines commonly include a clamping mechanism to secure the wheel rim, and a drive shaft assembly configured to rotate the secured wheel rim about an axis of a drive spindle. A bead breaker tool exerts forces on the tire adjacent the wheel rim edge to break the tire bead seal loose from the wheel rim. A tire removal tool sometimes referred to as a demount tool or tire hook, is used to pull the released tire bead off the wheel rim as the wheel rim is rotated about the spindle axis, allowing the tire to be separated from the wheel rim for removal. Mounting a tire to a wheel rim involves the reverse process. Manual or machine implemented tools are utilized to press the tire bead around the edge of the wheel rim for installation. While known tire changing machines have obtained some level of success in reducing the time and labor associated with changing a tire, there remains room for improvement, particularly in the ease and speed with which an operator can complete the process of securing a wheel rim and tire assembly onto the drive spindle and subsequent removal there from.

US2019291519, ITMI20102213, and WO2021004949 disclose prior art tire changing machines.

### BRIEF SUMMARY OF THE INVENTION

Briefly stated, an embodiment of the present invention provides a tire changing machine with an axial clamping system for rapidly securing a wheel assembly onto a rotatable drive spindle. The clamping system consists of a shaft for engaging an axial bore in the drive spindle. The shaft is configured with a set of ball bearings seated within radial bores adjacent a first axial end of the shaft. The radial bores are arranged in a spiral configuration and extend into a central bore containing a movable plunger. The movable plunger is coupled at an opposite axial end of the shaft to a spring-loaded release tab, such that axial movement of the plunger within the central bore displaces the ball bearings into the radial bores to protrude outboard of the outer surface of the shaft, engaging spiral channels within the peripheral surface of the axial bore of the drive spindle. Handles coupled to the shaft allow an operator to rotate the shaft within the axial bore of the drive spindle while the ball bearing are engaged with the spiral channels, tightening a clamp nut against a wheel assembly seated on the drive spindle. Counter rotation of the handles and retraction of the plunger in the shaft releases the clamping forces, allowing for removal of the wheel assembly from the drive spindle upon completion of a wheel service procedure.

The foregoing features, and advantages set forth in the embodiments of the present invention as well as presently preferred embodiments will become more apparent from the reading of the following description in connection with the accompanying drawings.

### BRIEF DESCRIPTION OF THE SEVERAL VIEWS OF THE DRAWINGS

In the accompanying drawings which form part of the specification:
Figure 1 is a perspective view of an exemplary prior art tire changing system;
Figure 2 is an illustration of a prior art wheel assembly being secured to a tire changing system by a prior art wheel clamp assembly;
Figure 3 is an exploded perspective view of a clamp assembly of an embodiment of the present invention;
Figure 4 is a sectional view of the clamp assembly of Fig. 3;
Figure 5 is a second sectional view of the clamp assembly of Fig. 3, sectioned perpendicular to the view of Fig. 4;
Figure 6 is a sectional view of a tire changing machine drive spindle for receiving the clamp assembly of Figs 3-5; and
Figure 7 is a sectional view illustrating the clamp assembly of Fig. 3 engaged with the tire changing machine drive spindle of Fig. 6.

Corresponding reference numerals indicate corresponding parts throughout the several figures of the drawings. It is to be understood that the drawings are for illustrating the concepts set forth in the embodiments of the present invention and are not to scale.

Before any embodiments of the invention are explained in detail, it is to be understood that the invention is not limited in its application to the details of construction and the arrangement of components set forth in the following description or illustrated in the drawings. The invention is only limited by the scope of the appended claims.

### DETAILED DESCRIPTION

The following detailed description illustrates the invention by way of example and not by way of limitation. The description enables one skilled in the art to make and use the embodiments of the present invention, and describes several embodiments, adaptations, variations, alternatives, and uses of the embodiments of the present invention, including what is presently believed to be the best mode of carrying out the embodiments of the present invention.

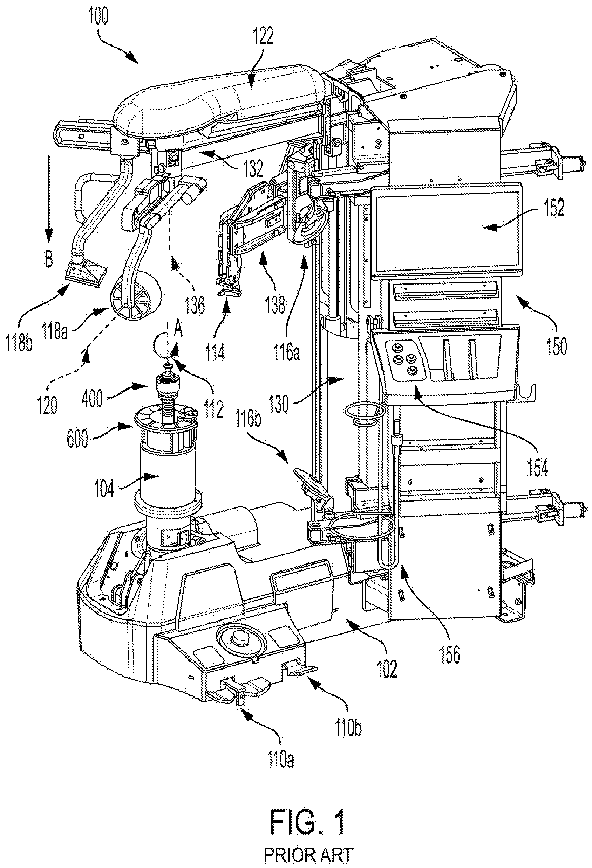

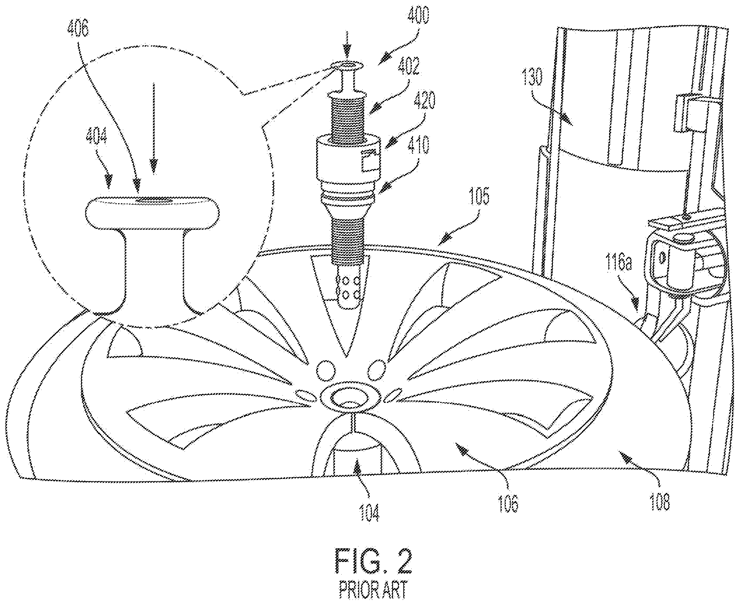

Figure 1 illustrates a prior art tire changing machine 100 including a frame or base 102 and a rotatable drive shaft assembly 104 attached to the base 102 for receiving and retaining a wheel assembly 105 consisting of a wheel rim 106 having a tire 108. The drive shaft assembly 104 may, as described in U.S. Patent No. 8,307,874 B1 to Hanneken et al.*,* be configured for movement to different positions to assist with lifting and mounting the wheel rim 106 to the drive shaft assembly 104 and may include a post or shaft positioned centrally on the base 102. As seen in Figure 2, the wheel rim 106 is secured to the drive shaft assembly 104 with a conventional clamping mechanism passed through a central bore in the wheel rim 106 to engage an axial receiver in the drive shaft assembly 104 after the wheel assembly 105 is loaded and mounted onto the tire changing machine 100.

The conventional clamping mechanism shown in Fig. 2 consists of a clamp nut assembly 400 disposed coaxially about a spindle 402 and secured in an axial position on the spindle 402 by engagement of a ring clamp with annular grooves formed in outer surface of the spindle 104. Engagement and release of the ring clamp is carried out by means of operator-engaged press tabs on the external surface of the clamp nut 420. The clamping mechanism terminates in a short knob 404, having an annular recessed region configured for an operator to easily engage between two fingers, such that the operator's thumb can simultaneously engage an axially extending release button 406 when seating the clamping mechanism within the drive shaft assembly receiver.

After the wheel rim 106 is clamped in position, an operator manipulates an input selector 110a which operates the drive shaft assembly 104 to rotate the wheel assembly 105 about a drive axis 112. In different exemplary embodiments, the drive shaft assembly 104 may be actuated pneumatically, hydraulically, or electrically. Clockwise and counterclockwise rotation about the drive axis 112, indicated by arrow A in Fig. 1, is possible in different embodiments. While the drive axis 112 is illustrated as being generally vertical in the embodiment depicted, the drive axis 112 may be oriented horizontally or otherwise in other embodiments, and a displacement of the drive axis 112 may be selectively adjusted relative to the base 102, such as by linear movement of the drive shaft assembly 104.

As the wheel rim 106 is rotated about the drive axis 112, a tool assembly 114 is brought into physical contact or engagement with the tire 108 in the direction of arrow B, at a location proximate an outer periphery of the rim 106. With the tool assembly 114 properly positioned with respect to the tire 108 and wheel rim 106, the wheel assembly 105 is further rotated about the axis 112 while the engaged tool assembly 114 demounts the tire 108 from the wheel rim 106. The tool assembly 114 may be further utilized to facilitate mounting a replacement tire 108 to a bare wheel rim 106 secured to the drive shaft assembly 104. While a single tool assembly 114 as shown may facilitate both mounting and demounting of tires 108 from the wheel rim 106, it is contemplated that separate mounting and demounting tools may likewise be provided and utilized.

The tool assembly 114 may include features such as a tire hook to separate or displace an inner circumference of the tire 108, including a tire bead surface, (not shown) over the outer lip of the wheel rim 106 to remove the tire 108 during a tire demount operation, or alternatively to engage the inner circumference of the tire 108 including the tire bead during installation or mounting of the tire 108 to the wheel rim 106. The tool assembly 114 is further described in U.S. Patent No. 8,973,640 B1 to Hanneken*.*

Bead breaker tools 116a and 116b, are configured to exert pressure on the sidewall surfaces of the tire 108 to either break a seal between the tire bead and the rim 106, or to push or displace the inner circumference of the tire 108 over the outer lip of the wheel rim 106 during installation of the tire 108. As shown in Figure 1, a first bead breaker tool is located above the tire 108 and a second is located below the tire 108. In another embodiment, only a single bead breaker tool 116 is be provided. Exemplary operation of the bead breaker tools 116, 116a, and 116b are more completely described in U.S. Patent No. 8,613,303 B1 to Hanneken et al.*.*

Machine tools 118a and 118b are provided and sometimes are referred to as pressing tools, pusher tools, or bead pressing devices. As shown in Figure 1, bead pressing devices 118a, 118b exert pressure on the tire sidewall during tire mounting and demounting procedures. As shown, bead pressing device 118a is a roller mounted for rotation about an axis 120 substantially perpendicular to the machine drive axis 112. Thus, when the roller 118a is placed in contact with a tire sidewall, it rotates about the axis 120 as the tire 108 is rotated about the machine drive axis 112, such that the roller 118a remains in a fixed position relative to the machine drive axis 112. When desired, the roller 118a is operable to rotate in tandem with the tire 108 about the drive axis 112.

The bead pressing device 118b is adapted for contact with the tire 108 and includes a frictional engagement surface to facilitate movement relative to the tire. When engaged with the tire sidewall, the bead pressing device 118b rotates about the drive axis 112 with the tire 108. Optionally the bead pressing device 118b may incorporate a feature for engaging a spoke, a hole, or other feature of the wheel rim 106 to ensure that the bead pressing device 118b (and the tire 108 with which it is engaged) rotate along with the wheel rim 106, and that the bead pressing device 118b does not move relative to the wheel rim 106. Alternatively, the bead pressing device 118b may be coupled with an independent drive mechanism 122 configured to push the bead pressing device 118b and the tire 108 in the direction of rim rotation about the drive axis 112. This establishes a "traction point" in addition to pushing the tire bead into the drop center of the wheel rim 106 when mounting the tire 108.

The bead pressing devices 118a, 118b may be spaced from one another to maintain the tire bead in a drop center of the wheel rim 106 during a tire demounting procedure, or to push the tire bead into the drop center during a tire mounting procedure. While two bead pressing devices 118a and 118b are shown in Figure 1, additional bead pressing devices 118 may be provided. Two or more bead pressing devices 118 are beneficial for mounting or demounting larger diameter tires and stiffer tires, although it is understood that in some cases a single bead pressing device 118 may be sufficient to mount or demount certain types of tires. Operation of the pressing tools and the independent drive mechanism are more completely described in U.S. Patent No. 8,387,675 B1 to Vaninger et al.*.*

In different exemplary embodiments, the tool assembly 114, and the machine tools 116, 118 are actuated pneumatically, electrically, or hydraulically, and serve to supply sufficient forces at the correct angles and locations with respect to the tire 108 such that the bead of the tire 108 is forced out of, or into, a bead seat on the wheel rim 106. While exemplary machine tools 116, 118 are illustrated in combination with the tool assembly 114, still other tire changing tools and devices may be provided and used for bead breaking, tire mounting and/or demounting, locating a valve stem, locating a wheel weight, locating a wheel sensor such as a Tire Pressure Monitoring System (TPMS) sensor, or other purposes. Such other tools may be provided in addition to, or in lieu of, the machine tools 116, 118 as depicted.

To assist with locating the tool assembly 114 and the machine tools 116, 118 a sensory capability may further be provided in the machine 100 to detect a position of the tool assembly 114 and the machine tools 116, 118 (or other tools that may be provided) with respect to the tire 108 and/or wheel rim 106. For example, a switch mechanism may be included that changes state when a bead breaker tool moves just beyond the outer edge of the wheel rim 106, ensuring that the tool is positioned to engage the tire 108 at a predetermined location. Machine vision systems can assist in aligning the machine tools with respect to the wheel rim 106 at predetermined locations. Force feedback sensors may be integrated as further monitoring and control features for the machine components, including but not limited to the machine tools. While such sensory capabilities may be beneficial, in some embodiments they may be considered optional and accordingly may not be present or utilized.

The machine 100 as shown in Figure 1 includes a support tower 130 extending from the base 102 at a location spaced from the drive shaft assembly 104. The support tower 130 extends to a height above any wheel assembly secured to the drive shaft assembly 104. A linkage 132 extends outwardly from the support tower 130, coupling to the bead pressing devices 118a, 118b. The linkage 132 is movable by an actuator on the support tower 130 in a direction parallel to arrow B in Figure 1, such that the bead pressing devices carried on the linkage 132 are moved either towards or away from the tire 108. As such, the bead pressing devices 118a, 118b may be moved in a direction parallel to the machine drive axis 112.

In addition to movement parallel to the machine drive axis 112, the bead pressing devices 118 are mounted to the linkage 132 such that they are rotatable about an axis 136 that is fixed and coincident with the machine drive axis 112. That is, the bead pressing devices 118 are rotatable about the axis 136 that is coaxial with the machine drive axis 112. Because the axis 136 is coincident with the drive axis 112, when the bead pressing devices 118 are in contact with the tire 108, the bead pressing devices 118 may rotate with the tire 108 as it is rotated about the drive axis 112.

While locating the rotation axis 136 of the bead pressing devices 118 at a fixed and set distance and location from the tower support frame 130 can be beneficial for the reasons stated, it is recognized that in further and/or alternative embodiments, neither the location of the drive axis 112, nor the rotational axis 136 for the bead pressing devices, need necessarily be fixed in such a manner so long as the axes 112 and 136 are adjustable to become coincident when the bead pressing devices 118 are utilized. That is, either or both of the axes 112 and 136 may be movable to different positions, distances and orientations relative to each other, and relative to the tower support frame 130, for reasons not pertinent to the use of the bead pressing devices 118a, 118b, but when the bead pressing devices 118a, 118b are to be engaged to the tire, the axes 112 and 136 are moved to become coincident once again so that the bead pressing devices 118 may rotate with the tire 108 about the drive axis 112.

The bead pressing devices 118a, 118b are further movable in a direction perpendicular to the axis 136 and the drive axis 112. That is, actuators are provided that move the bead pressing devices 118a, 118b radially toward, and away from, the drive axis 112, such that the bead pressing devices 118 may be manually or automatically adjusted to different radial positions measured from the drive axis 112 accommodating tires and rims of different diameters. The bead pressing devices 118 may be manually or automatically positioned in the direction perpendicular to the drive axis 112 as described below.

The bead breaker tools 116a, 116b are coupled to and supported by the tower support frame 130 (or other support structure in an alternative embodiment) via linkages movable in vertical and horizontal directions to position the bead breaker tools 116a, 116b relative to the wheel rim 106 and tire 108 during use.

The tool assembly 114 is likewise coupled to a support 138 and associated linkages on the tower support frame 130 by actuators such that the support 138 is movable relative to the tower support frame 130 in the vertical and horizontal directions. As such, the tool assembly 114 is movable radially toward and away from the drive axis 112, and toward and away from the wheel assembly 105 in a direction parallel to arrow B. The tool assembly 114 operates independent of the tools 116, 118, but may be used in concert while changing the tire 108. The positions of the various components 114, 116, and 118, and operation of the drive shaft assembly 104 and other features of the machine 100 may be coordinated by a programmable control unit and actuator components.

A machine operator may manipulate input selectors 110a, and 110b to direct the control unit to move the tool assembly 114, and the tools 116, 118 to desired positions, to operate the drive shaft assembly 104, or to activate other machine features. In illustrative embodiments, the input selectors 110a, 110b are foot pedals located near the bottom of the machine base 102 for convenient use of the machine operator(s). In other embodiments, input devices 154, including but not limited to levers, buttons, knobs, switches, joysticks, and touch sensitive display 152 may be employed in various locations on or near the machine 100. An operator station 150 including a display 152 and an input device 154 including a keyboard or other input selectors may be optionally provided for the benefit of the operator.

When operating the tire changing machine 100, a preliminary step required before performing a wheel assembly service procedure is to secure the wheel rim 106 to the drive shaft assembly 104. Generally, the wheel rim 106 is secured to the drive shaft assembly 104 by means of a clamping mechanism which retains the wheel rim 106 coaxially against an axial end of the drive assembly.

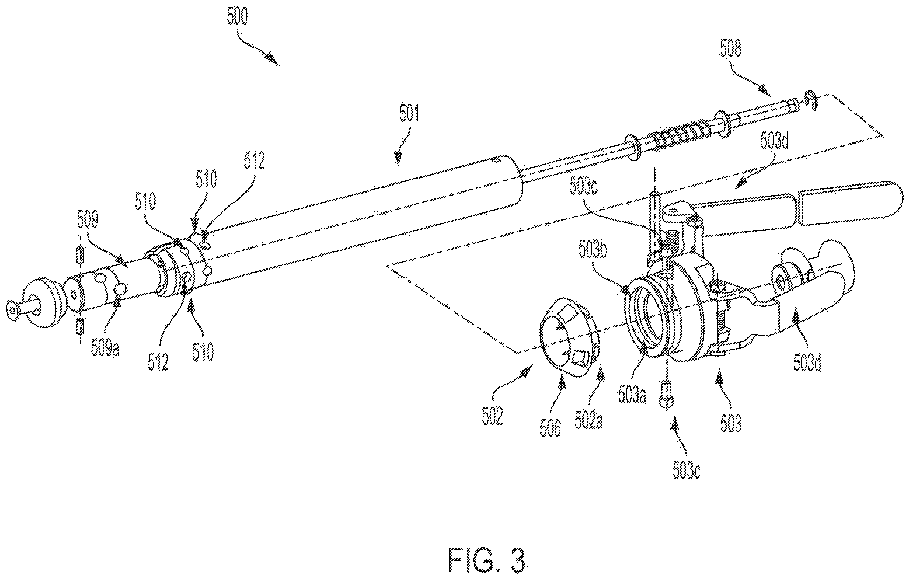

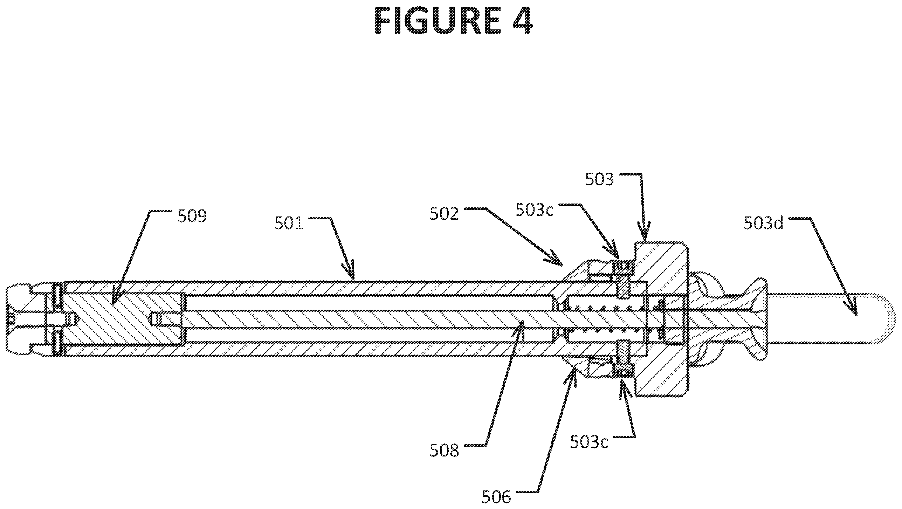

Turning to Figures 3-7, a clamping mechanism of an embodiment of the present invention is shown generally at 500. The clamping mechanism 500 consists of a hollow spindle assembly 501 for engaging the drive shaft assembly 104, an interchangeable annular wheel cone 502 seated on the spindle assembly 501 for centering a wheel rim 106, and a handle assembly 503 affixed to the spindle assembly 501 axially outboard of the annular wheel cone 502. The handle assembly 503 is secured to the spindle assembly 501 by bolts 503c and includes a pair of folding handles 503d for transferring torque to rotationally clamp or release the spindle assembly 501 to or from the drive shaft assembly 104. The annular wheel cone 502 has an axial bore sized to receive the spindle assembly 501 and includes a conical surface 506 configured to facilitate the centering of a wheel rim 106 center bore about an axis of the clamping mechanism 500. During use, the conical surface 506 seats against a peripheral edge of a wheel's center bore through which the spindle assembly 501 is passed to axially engage with the drive shaft assembly 104, centering the wheel rim 106 about the spindle assembly axis. A set of interchangeable annular wheel cones 502 having differing conical surfaces 506 can be utilized with the spindle assembly 501 to accommodate a variety of different sizes for wheel rim center bores. As shown in Fig. 3, each annular wheel cone 502 is secured coaxial with the handle assembly 503 by means of either snap-fit tabs or a spring-loaded ring 502a engaging an annular recess 503a within the handle assembly 503.

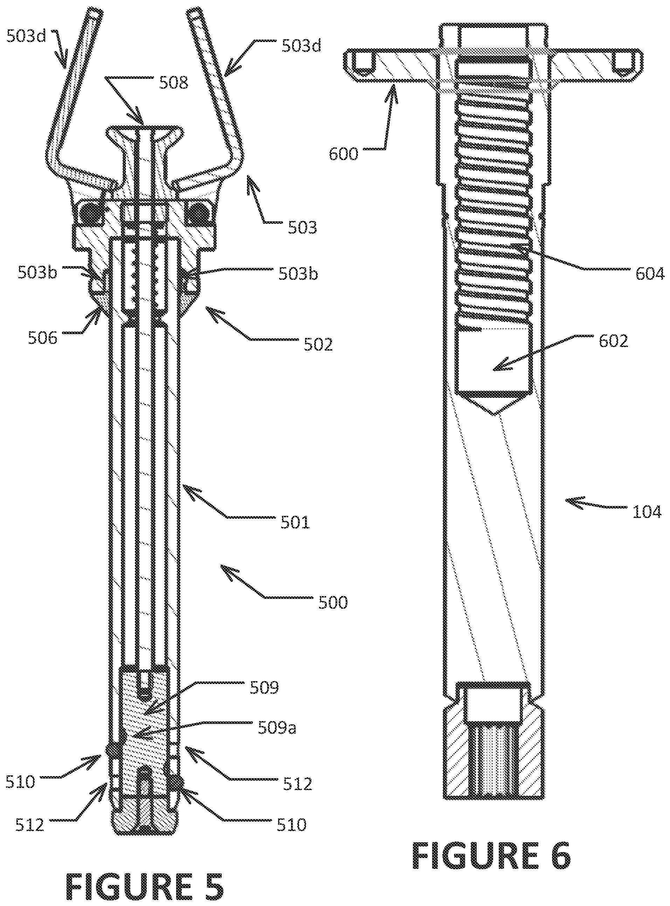

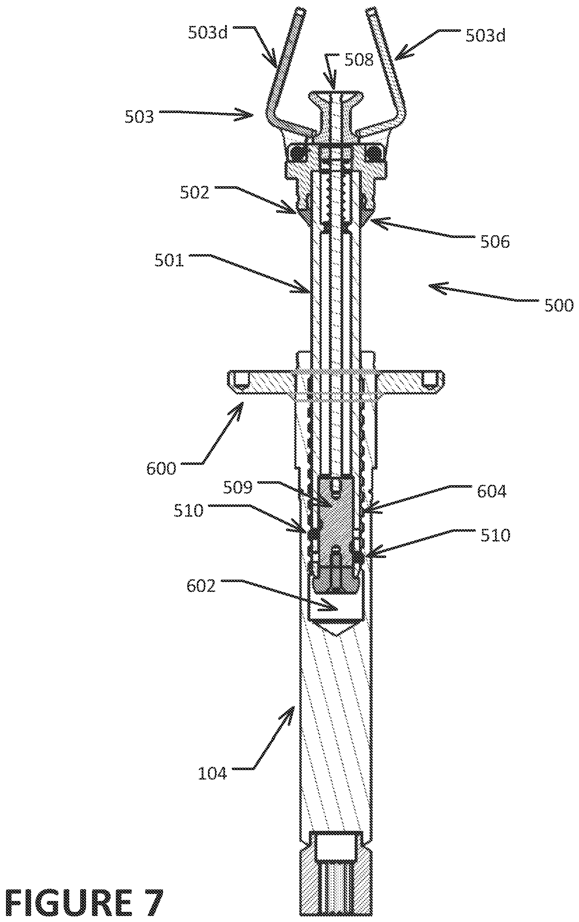

Securing the wheel rim 106 to the drive shaft assembly 104 with the components of the embodiments of the present invention requires four steps. Initially the wheel rim 106 is positioned coaxially on a receiving flange 600 at an upper end of the drive shaft assembly 104, best seen in Figure 6. The spindle assembly 501 is next passed axially through the wheel rim center bore, and into a receiving bore of the drive shaft assembly 104 as shown in Fig. 7 to position the conical surface 506 of the wheel cone 502 in close proximity to, or in contact with an upper edge of the wheel rim center bore. To permit placement of the spindle assembly 501 within the receiving bore, a spring-loaded push rod 508 extending axially from an upper end of the spindle assembly 501 adjacent to the handle assembly 503 is depressed to axially shift an internal cylinder 509 within the spindle assembly 501 adjacent to an axially opposite end. The internal cylinder 509 includes radial recesses 509a in a spiral configuration sized to receive ball bearings 510. Axially shifting the internal cylinder 509 moves the radial recesses 509a into alignment with a set of spiral spaced radial bores 512 passing through the outer wall of the spindle assembly 501, each of which partially contains an associated ball bearing 510, allowing the ball bearings 510 to shift radially into the radial recesses 509a, to be contained within the outer surface of the spindle assembly 501. It will be readily understood that the radial thickness of the spindle assembly outer surface is less than the diameter of the ball bearings 510, thereby ensuring that the ball bearings cannot be fully contained within the radial bores 512 alone. With the ball bearings 510 retracted, the spindle assembly may pass axially through the center bore of the wheel rim 106, and into the receiving bore of the drive shaft assembly 104.

With the spindle assembly 501 in place, the spring-loaded push rod 508 is disengaged, and is biased to return to an extended position, drawing the internal cylinder 509 axially upward. Shifting the internal cylinder 509 moves the radial recesses 509a out of alignment with the radial bores 512, forcing the ball bearings 510 radially outward within the radial bores 512 and into engagement with spiral cut channels 604 within the drive shaft assembly bore 602. Finally, torque is applied to the handle assembly 503 to rotate the entire clamping mechanism 500 about a longitudinal axis of the spindle assembly, drawing the wheel cone 502 into centered clamping engagement with the wheel rim by a threading interaction between the ball bearings 510 and the spiral cut channels 604.

To release the wheel assembly 106, the process is reversed. First, the handle assembly 503 is rotated in reverse to unthread the ball bearings 510 engaged with the spiral cut channels 604 within the drive shaft assembly bore 602, relieving the clamping force exerted on the wheel rim by the wheel cone 502. Next, the spring-loaded push rod 508 is engaged, displacing the internal cylinder 509 within the spindle assembly 501, aligning the radial bores 512 and the radial recesses 509a. With the radial bores 512 and radial recesses 509a aligned, the ball bearings 510 are free to disengage from the spiral cut channels 604, and retract below the surface of the spindle assembly 501. Upon disengagement of the ball bearings 510 from the spiral cut channels 604, the spindle assembly 501 is axially removed from the drive shaft assembly 104 receiving bore 602, and the wheel assembly 106 is released.

As various changes could be made in the above constructions without departing from the scope of the appended claims, it is intended that all matter contained in the above description or shown in the accompanying drawings shall be interpreted as illustrative and not in a limiting sense.

## Claims

1. A tire changing machine (100) comprising:
a drive shaft assembly (104) configured to receive a wheel rim (106) for rotation about an axis;
a clamping mechanism (500) configured to releasably engage said drive shaft assembly (104) to secure said wheel rim (106) to said drive shaft assembly (104);
a plurality of tools (116, 118) configured to mount a tire (108) on said wheel rim (106) and to demount said tire (108) from said wheel rim (106);
a control system configured to coordinate operation of said plurality of tools (116, 118);
a control input element (154) configured for operation by a human operator to direct said control system to conduct a tire service procedure for said wheel rim (106) secured by said clamping mechanism (500);
wherein said clamping mechanism (500) includes an annular wheel cone (502) seated on a spindle assembly (501), said annular wheel cone (502) having a conical surface (506) configured to engage a surface of said wheel rim (106), and a handle assembly (503) affixed to said spindle assembly (501), said handle assembly (503) configured to transfer an applied rotational torque to said spindle assembly (501) to rotate the entire clamping mechanism (500) about a longitudinal axis of the spindle assembly (501); and
wherein said spindle assembly (501) is sized for placement within an axial bore of said drive shaft assembly (104), said spindle assembly (501) **characterized by** a set of ball bearings (510) seated for radial displacement within a plurality of spiral-spaced radial bores (512) located in said spindle assembly (501), said set of ball bearings (510) configured to engage, in a first position, at least one spiral channel (604) formed into an inner surface of a central bore (602) of said drive shaft assembly (104), and to withdraw radially within said spindle assembly (501) in a second position, said set of ball bearings (510) responsive to axial displacement of a push rod (508) within said spindle assembly (501) to transition between said first and second positions.

2. The tire changing machine of Claim 1 wherein said annular wheel cone (502) is releasably secured to said handle assembly (503), coaxial with said spindle assembly (501).

3. The tire changing machine of either of Claims 1 or 2 wherein said push rod (508) is spring-biased towards a first axial position in which said set of ball bearings (510) is displaced to said first position.

4. The tire changing machine of any of Claims 1-3 wherein said push rod (508) terminates at an upper axial end of said spindle assembly (501) in a button (406), and at a lower axial end at a cylinder member (509) contained coaxially within said spindle assembly (501), said cylinder member (509) having a plurality of radially oriented recesses (509a) arranged in a spiral-spaced configuration to align with said spiral-spaced radial bores (512) when said axial push rod (508) is displaced within said spindle assembly (501) to a second axial position.

5. The tire changing machine of any of Claims 1-4 wherein an external surface of said cylinder member (509) displaces said set of ball bearings (510) radially outward towards said first position when said push rod (508) is displaced to said first axial position.

6. The tire changing machine of Claim 4 wherein an external surface of said cylinder member (509) receives said set of ball bearings (510) in said second position within said plurality of radially oriented recesses (509a) when said push rod (508) is displaced to said second axial position.

7. The tire changing machine of any of Claims 1-6 wherein application of torque to said handle assembly (503) in a first rotational direction threads said clamping mechanism (500) into said central bore (602) of said drive shaft assembly (104) while said set of ball bearings (510) are in said first position.

8. The tire changing machine of Claim 7 wherein application of torque to said handle assembly (503) in a second rotational direction unthreads said clamping mechanism (500) from said central bore (602) of said drive shaft assembly (104) while said set of ball bearings (510) are in said first position.

9. The tire changing machine of any of Claims 1-8 wherein said clamping mechanism (500) is released from engagement with said central bore (602) of said drive shaft assembly (104) while said set of ball bearings (510) are in said second position.

10. A method for securing a wheel rim (106) to a drive assembly (104) of a tire changing machine (100) using a clamping mechanism (500) which includes a spindle assembly (501) configured for seating axially within a central bore (602) of said drive assembly (104);
a handle assembly (503) affixed to a first axial end of said spindle assembly (501);
an annular wheel cone (502) seated concentrically about said spindle assembly (501), axially adjacent to said handle assembly (503);
a set of spiral-spaced radial bores (512) adjacent a second axial end of said spindle assembly (501), each of said spiral-spaced radial bores (512) holding a ball bearing (510) displaceable between a first position recessed fully within said associated radial bore (512), and a second position at least partially protruding radially outward from said associated radial bore (512); and
a push rod (508) located axially within said spindle assembly (501), said push rod (508) terminating at a first end axially outward of said handle assembly (503), and at a second end coupled to a cylindrical member (509) having a plurality of spiral-spaced recesses (509a), said push rod (508) and said cylindrical member (509) biased to axially translate between a first axial position in which said spiral-spaced recesses (509a) are displaced from said spiral-spaced radial bores (512), and a second axial position in which said spiral-spaced recesses (509a) are aligned with said spiral-spaced radial bores (512) to receive said ball bearings (510);
wherein the method comprises:
positioning a wheel rim (106) on a wheel receiving flange (600) of said drive assembly (104);
axially depressing said first end of said push rod 508 within said spindle assembly (501) into said second axial position to axially align said spiral-spaced recesses (509a) on said internal cylinder (509) with said spiral-spaced radial bores (512);
passing said spindle assembly (501) through a center bore of said wheel rim (106) and into said drive assembly central bore (602) until a conical surface (506) of said annular wheel cone (502) is in at least close proximity to an edge of said wheel rim center bore;
releasing said first end of said axial push rod (508) to return said axial push rod (508) to said first axial position, displacing said spiral-spaced recesses (509a) on said internal cylinder (509) from axial alignment with said spiral-spaced radial bores (512), driving said associated ball bearings (510) radially outward from said spiral-spaced radial bores (512) and into engagement with a spiral-cut channel (604) within said drive assembly central bore (602); and
applying a rotational torque in a first direction to said handle assembly (503), said rotational torque threading said spindle assembly (501) into said drive assembly central bore (602) by engagement of said ball bearings (512) with said spiral-cut channel (604), clamping said wheel rim (106) coaxially between said conical surface (506) of said annular wheel cone (502) and said wheel receiving flange (600).

11. The method of Claim 10 wherein releasing said wheel rim (106) from between said conical surface (506) of said annular wheel cone (502) and said wheel receiving flange (600) includes:
applying a rotational torque in a second direction to said handle assembly (503), said rotational torque in said second direction unthreading said spindle assembly (501) from said drive assembly central bore (602) by engagement of said ball bearings (510) with said spiral-cut channel (604), unclamping said annular wheel cone conical surface (506) from said wheel rim (106);
axially displacing said first end of said axial push rod (508) in said spindle assembly (501) into said second axial position to axially align said spiral spaced recesses (509a) on said internal cylinder (509) with said spiral-spaced radial bores (512), withdrawing said associated ball bearings (510) from engagement with said spiral-cut channel (604); and
withdrawing said spindle assembly (501) from said wheel rim (106) and said drive assembly central bore (602), releasing said wheel rim (106).

12. The method of Claim 10 wherein axially displacing said first end of said axial push rod (508) in said spindle assembly (501) into said second axial position, axially aligns said spiral-spaced recesses (509a) on said internal cylinder (509) with said spiral-spaced radial bores (512), shifting said ball bearings (510) radially inward from said spiral-spaced radial bores (510).

## Patentansprüche

1. Reifenwechselmaschine (100) umfassend:
eine Antriebswellenbaugruppe (104), die zur Aufnahme einer Radfelge (106) zur Drehung um eine Achse konfiguriert ist;
einen Klemmmechanismus (500), der zur lösbaren Ineingriffnahme der Antriebswellenbaugruppe (104) konfiguriert ist, um die Radfelge (106) an der Antriebswellenbaugruppe (104) zu befestigen;
mehrere Werkzeuge (116, 118) zum Montieren eines Reifens (108) auf der Radfelge (106) und zum Demontieren des Reifens (108) von der Radfelge (106) ;
ein Steuerungssystem zum Koordinieren des Betriebs der mehreren Werkzeuge (116, 118);
ein Steuerungseingabeelement (154), das von einer Bedienperson bedient werden kann, um das Steuerungssystem anzuweisen, einen Reifenservice für die durch den Klemmmechanismus (500) befestigte Radfelge (106) durchzuführen;
wobei der Klemmmechanismus (500) einen ringförmigen Radkegel (502) umfasst, der auf einer Spindelbaugruppe (501) sitzt, wobei der ringförmige Radkegel (502) eine konische Oberfläche (506) aufweist, die so konfiguriert ist, dass sie mit einer Oberfläche der Radfelge (106) in Eingriff steht, und eine Griffbaugruppe (503), die an der Spindelbaugruppe (501) befestigt ist, wobei die Griffbaugruppe (503) so konfiguriert ist, dass sie ein aufgebrachtes Drehmoment auf die Spindelbaugruppe (501) überträgt, um den gesamten Klemmmechanismus (500) um eine Längsachse der Spindelbaugruppe (501) zu drehen; und
wobei die Spindelbaugruppe (501) so bemessen ist, dass sie in einer axialen Bohrung der Antriebswellenbaugruppe (104) platziert werden kann, wobei die Spindelbaugruppe (501) durch einen Satz Kugellager (510) gekennzeichnet ist, die radial verschiebbar in mehreren spiralförmig beabstandeter radialer Bohrungen (512) in der Spindelbaugruppe (501) sitzen, wobei der Satz Kugellager (510) so konfiguriert ist, dass er in einer ersten Position in mindestens einen Spiralkanal (604) eingreift, der in eine Innenfläche einer zentralen Bohrung (602) der Antriebswellenbaugruppe (104) eingeformt ist, und sich in einer zweiten Position radial innerhalb der Spindelbaugruppe (501) zurückzieht, wobei der Satz Kugellager (510) auf eine axiale Verschiebung einer Schubstange (508) innerhalb der Spindelbaugruppe (501) reagiert, um zwischen der ersten und der zweiten Position zu wechseln.

2. Reifenwechselmaschine nach Anspruch 1, wobei der ringförmige Radkegel (502) lösbar an der Griffbaugruppe (503) koaxial zur Spindelbaugruppe (501)befestigt ist.

3. Reifenwechselmaschine nach Anspruch 1 oder 2, wobei die Schubstange (508) durch eine Feder in Richtung einer ersten axialen Position vorgespannt ist, in welcher der Satz Kugellager (510) in Richtung der ersten Position verschoben wird.

4. Reifenwechselmaschine nach einem der Ansprüche 1-3, wobei die Schubstange (508) an einem oberen axialen Ende der Spindelbaugruppe (501) in einem Knopf (406) endet und an einem unteren axialen Ende in einem Zylinderelement (509), das koaxial in der Spindelbaugruppe (501) enthalten ist, wobei das Zylinderelement (509) mehrere radial ausgerichtete Aussparungen (509a) aufweist, die in einer spiralförmig beabstandeten Konfiguration angeordnet sind, um sich in den spiralförmig beabstandeten radialen Bohrungen (512) auszurichten, wenn die axiale Schubstange (508) in der Spindelbaugruppe (501) in eine zweite axiale Position verschoben wird.

5. Reifenwechselmaschine nach einem der Ansprüche 1 bis 4, wobei eine Außenfläche des Zylinderelements (509) den Kugellagersatz (510) radial nach außen in Richtung der ersten Position verschiebt, wenn die Schubstange (508) in die erste axiale Position verschoben wird.

6. Reifenwechselmaschine nach Anspruch 4, wobei eine Außenfläche des Zylinderelements (509) den Satz Kugellager (510) in einer zweiten Position innerhalb mehrerer radial ausgerichteter Aussparungen (509a) aufnimmt, wenn die Schubstange (508) in die zweite Position verschoben wird.

7. Reifenwechselmaschine nach einem der Ansprüche 1-6, wobei das Aufbringen eines Drehmoments auf die Griffbaugruppe (503) in einer ersten Drehrichtung den Klemmmechanismus (500) in die zentrale Bohrung (602) der Antriebswellenbaugruppe (104) schraubt, während sich der Satz Kugellager (510) in der ersten Position befindet.

8. Reifenwechselmaschine nach Anspruch 7, wobei das Aufbringen eines Drehmoments auf die Griffbaugruppe (503) in einer zweiten Drehrichtung der Klemmmechanismus (500) aus der zentralen Bohrung (602) der Antriebswellenbaugruppe (104) herausgeschraubt, während sich der Satz Kugellager (510) in der ersten Position befindet.

9. Reifenwechselmaschine nach einem der Ansprüche 1 bis 8, wobei der Klemmmechanismus (500) aus dem Eingriff mit der zentralen Bohrung (602) der Antriebswellenbaugruppe (104) gelöst ist, während sich der Satz Kugellager (510) in der zweiten Position befindet.

10. Verfahren zum Befestigen einer Radfelge (106) an einer Antriebsbaugruppe (104) einer Reifenwechselmaschine (100) unter Verwendung eines Klemmmechanismus (500), welcher umfasst:
eine Spindelbaugruppe (501), die axial in einer zentralen Bohrung (602) der Antriebsbaugruppe (104) sitzt;
eine Griffbaugruppe (503), die an einem ersten axialen Ende der Spindelbaugruppe (501) befestigt ist;
einen ringförmigen Radkegel (502), der konzentrisch um die Spindelbaugruppe (501) axial neben der Griffbaugruppe (503) sitzt,;
einen Satz spiralförmig beabstandeter radialer Bohrungen (512) neben einem zweiten axialen Ende der Spindelbaugruppe (501), wobei jede der spiralförmig beabstandeten radialen Bohrungen (512) ein Kugellager (510) hält, das zwischen einer ersten Position, in der es vollständig in der zugehörigen radialen Bohrung versenkt ist, und einer zweiten Position, in der es zumindest teilweise radial nach außen aus der zugehörigen radialen Bohrung (512) hervorsteht, verschiebbar ist; und
eine Schubstange (508), die axial innerhalb der Spindelbaugruppe (501) angeordnet ist, wobei die Schubstange (508) an einem ersten Ende axial außerhalb der Griffbaugruppe (503) endet und an einem zweiten Ende mit einem zylindrischen Element (509) verbunden ist, das mehrere spiralförmig beabstandete Aussparungen (509a) aufweist, wobei die Schubstange (508) und das zylindrische Element (509) vorgespannt sind, um sich axial zwischen einer ersten axialen Position,
in der die spiralförmig beabstandeten Aussparungen (509a) von den spiralförmig beabstandeten radialen Bohrungen (512) verlagert sind, und einer zweiten axialen Position zu verschieben, in der die spiralförmig beabstandeten Aussparungen (509a) mit den spiralförmig beabstandeten radialen Bohrungen (512) ausgerichtet sind, um die Kugellager (510) aufzunehmen;
wobei das Verfahren umfasst:
Positionieren einer Radfelge (106) auf einem Radaufnahmeflansch (600) der Antriebsbaugruppe (104);
axiales Drücken des ersten Endes der Schubstange (508) innerhalb der Spindelbaugruppe (501) in die zweite axiale Position, um die spiralförmig beabstandeten Aussparungen (509a) am Innenzylinder (509) axial mit den spiralförmig beabstandeten radialen Bohrungen (512) auszurichten;
Durchführen der Spindelbaugruppe (501) durch eine zentrale Bohrung der Radfelge (106) und in die zentrale Bohrung (602) der Antriebsbaugruppe, bis sich eine konische Oberfläche (506) des ringförmigen Radkegels (502) zumindest in unmittelbarer Nähe eines Randes der zentralen Bohrung der Radfelge befindet;
Freigeben des ersten Endes der axialen Schubstange (508), um diese in die erste axiale Position zurückzubringen, wodurch die spiralförmig angeordneten Aussparungen (509a) am Innenzylinder (509) aus der axialen Ausrichtung mit den spiralförmig angeordneten radialen Bohrungen (512) verschoben werden und die zugehörigen Kugellager (510) radial nach außen von den spiralförmig angeordneten radialen Bohrungen (512) in Eingriff mit einem spiralförmig geschnittenen Kanal (604) in der zentralen Bohrung (602) der Antriebsbaugruppe gebracht werden; und
Aufbringen eines Drehmoments in einer ersten Richtung auf die Griffbaugruppe (503), wobei das Drehmoment die Spindelbaugruppe (501) durch Eingriff der Kugellager (512) mit dem spiralförmig geschnittenen Kanal (604) in die zentrale Bohrung (602) der Antriebsanordnung einschraubt und die Radfelge (106) koaxial zwischen der konischen Oberfläche (506) des ringförmigen Radkegels (502) und dem Radaufnahmeflansch (600) einklemmt.

11. Verfahren nach Anspruch 10, wobei das Lösen der Radfelge (106) zwischen der konischen Oberfläche (506) des ringförmigen Radkegels (502) und dem Radaufnahmeflansch (600) Folgendes umfasst:
Aufbringen eines Drehmoments in eine zweite Richtung auf die Griffbaugruppe (503), wobei das Drehmoment in der zweiten Richtung die Spindelbaugruppe (501) durch Eingriff der Kugellager (510) in den spiralförmigen Kanal (604) aus der zentralen Bohrung (602) der Antriebsbaugruppe herausdreht, Lösen der ringförmigen konischen Radkegelfläche (506) von der Radfelge (106);
axiales Verschieben des ersten Endes der axialen Schubstange (508) in der Spindelbaugruppe (501) in die zweite axiale Position, um die spiralförmig beabstandeten Aussparungen (509a) am Innenzylinder (509) axial mit den spiralförmig beabstandeten radialen Bohrungen (512) auszurichten, Herausziehen der zugehörigen Kugellager (510) aus dem Eingriff mit dem spiralförmig geschnittenen Kanal 604; und
Abziehen der Spindelbaugruppe (501) von der Radfelge (106).

12. Verfahren nach Anspruch 10, wobei durch das axiale Verschieben des ersten Endes der axialen Schubstange (508) in der Spindelbaugruppe (501) in die zweite axiale Position die spiralförmig beabstandeten Aussparungen (509a) am Innenzylinder (509) axial mit den spiralförmig beabstandeten Bohrungen (512) ausgerichtet werden, wodurch die Kugellager (510) von den spiralförmig beabstandeten radialen Bohrungen (510) radial nach innen verschoben werden.

## Revendications

1. Machine de changement de pneu (100) comprenant :
un ensemble d'arbre d'entraînement (104) configuré pour recevoir une jante de roue (106) pour une rotation autour d'un axe ;
un mécanisme de serrage (500) configuré pour être en contact de manière libérable avec ledit ensemble d'arbre d'entraînement (104) pour fixer ladite jante de roue (106) audit ensemble d'arbre d'entraînement (104) ;
une pluralité d'outils (116, 118) configurés pour monter un pneu (108) sur ladite jante de roue (106) et pour démonter ledit pneu (108) de ladite jante de roue (106) ;
un système de commande configuré pour coordonner le fonctionnement de ladite pluralité d'outils (116, 118) ;
un élément d'entrée de commande (154) configuré pour être actionné par un opérateur humain pour ordonner audit système de commande d'effectuer une procédure d'entretien de pneu pour ladite jante de roue (106) fixée par ledit mécanisme de serrage (500) ;
dans laquelle ledit mécanisme de serrage (500) comporte un cône de roue annulaire (502) placé sur un ensemble de broche (501), ledit cône de roue annulaire (502) ayant une surface conique (506) configurée pour être en contact avec une surface de ladite jante de roue (106), et un ensemble de poignée (503) fixé audit ensemble de broche (501), ledit ensemble de poignée (503) étant configuré pour transférer un couple de rotation appliqué audit ensemble de broche (501) pour faire tourner l'ensemble du mécanisme de serrage (500) autour d'un axe longitudinal de l'ensemble de broche (501) ; et
dans laquelle ledit ensemble de broche (501) est dimensionné pour être placé à l'intérieur d'un alésage axial dudit ensemble d'arbre d'entraînement (104), ledit ensemble de broche (501) étant **caractérisé par** un ensemble de roulements à billes (510) placé pour se déplacer radialement à l'intérieur d'une pluralité d'alésages radiaux (512) espacés en spirale situés dans ledit ensemble de broche (501), ledit ensemble de roulements à billes (510) étant configuré pour être en contact, dans une première position, avec au moins un canal (604) en spirale formé dans une surface intérieure d'un alésage central (602) dudit ensemble d'arbre d'entraînement (104), et pour retirer radialement à l'intérieur dudit ensemble de broche (501), dans une deuxième position, ledit ensemble de roulements à billes (510) en réponse au déplacement axial d'une tige de poussée (508) à l'intérieur dudit ensemble de broche (501) pour passer entre lesdites première et deuxième positions.

2. Machine de changement de pneu selon la revendication 1 dans laquelle ledit cône de roue annulaire (502) est fixé de manière libérable audit ensemble de poignée (503), coaxial avec ledit ensemble de broche (501).

3. Machine de changement de pneu selon l'une ou l'autre des revendications 1 ou 2 dans laquelle ladite tige de poussée (508) est sollicitée par ressort vers une première position axiale dans laquelle ledit ensemble de roulements à billes (510) est déplacé vers ladite première position.

4. Machine de changement de pneu selon l'une quelconque des revendications 1-3 dans laquelle ladite tige de poussée (508) se termine à une extrémité axiale supérieure dudit ensemble de broche (501) dans un bouton (406), et à une extrémité axiale inférieure au niveau d'un organe de cylindre (509) contenu coaxialement à l'intérieur dudit ensemble de broche (501), ledit organe de cylindre (509) présentant une pluralité d'évidements orientés radialement (509a) agencés dans une configuration espacée en spirale pour s'aligner avec lesdits alésages radiaux (512) espacés en spirale lorsque ladite tige de poussée axiale (508) est déplacée à l'intérieur dudit ensemble de broche (501) vers une deuxième position axiale.

5. Machine de changement de pneu selon l'une quelconque des revendications 1-4 dans laquelle une surface externe dudit organe de cylindre (509) déplace ledit ensemble de roulements à billes (510) radialement vers l'extérieur vers ladite première position lorsque ladite tige de poussée (508) est déplacée vers ladite première position axiale.

6. Machine de changement de pneu selon la revendication 4 dans laquelle une surface externe dudit organe de cylindre (509) reçoit ledit ensemble de roulements à billes (510) dans ladite deuxième position à l'intérieur de ladite pluralité d'évidements orientés radialement (509a) lorsque ladite tige de poussée (508) est déplacée vers ladite deuxième position axiale.

7. Machine de changement de pneu selon l'une quelconque des revendications 1-6 dans laquelle l'application d'un couple audit ensemble de poignée (503) dans une première direction de rotation visse ledit mécanisme de serrage (500) dans ledit alésage central (602) dudit ensemble d'arbre d'entraînement (104) pendant que ledit ensemble de roulements à billes (510) sont dans ladite première position.

8. Machine de changement de pneu selon la revendication 7 dans laquelle l'application d'un couple audit ensemble de poignée (503) dans une deuxième direction de rotation dévisse ledit mécanisme de serrage (500) dudit alésage central (602) dudit ensemble d'arbre d'entraînement (104) pendant que ledit ensemble de roulements à billes (510) sont dans ladite première position.

9. Machine de changement de pneu selon l'une quelconque des revendications 1-8 dans laquelle ledit mécanisme de serrage (500) est libéré de la mise en contact avec ledit alésage central (602) dudit ensemble d'arbre d'entraînement (104) pendant que ledit ensemble de roulements à billes (510) sont dans ladite deuxième position.

10. Procédé pour fixer une jante de roue (106) à un ensemble d'entraînement (104) d'une machine de changement de pneu (100) à l'aide d'un mécanisme de serrage (500) qui comporte un ensemble de broche (501) configuré pour être placé axialement à l'intérieur d'un alésage central (602) dudit ensemble d'entraînement (104) ;
un ensemble de poignée (503) fixé à une première extrémité axiale dudit ensemble de broche (501) ;
un cône de roue annulaire (502) placé de manière concentrique autour dudit ensemble de broche (501), axialement adjacent audit ensemble de poignée (503) ;
un ensemble d'alésages radiaux (512) espacés en spirale adjacents à une deuxième extrémité axiale dudit ensemble de broche (501), chacun desdits alésages radiaux (512) espacés en spirale tenant un roulement à billes (510) déplaçable entre une première position entièrement en retrait à l'intérieur dudit alésage radial (512) associé, et une deuxième position faisant au moins partiellement saillie radialement vers l'extérieur à partir dudit alésage radial (512) associé ; et
une tige de poussée (508) située axialement à l'intérieur dudit ensemble de broche (501), ladite tige de poussée (508) se terminant à une première extrémité axialement vers l'extérieur dudit ensemble de poignée (503), et à une deuxième extrémité couplée à un organe cylindrique (509) présentant une pluralité d'évidements espacés en spirale (509a), ladite tige de poussée (508) et ledit organe cylindrique (509) étant sollicités pour se translater axialement entre une première position axiale dans laquelle lesdits évidements espacés en spirale (509a) sont déplacés à partir desdits alésages radiaux (512) espacés en spirale, et une deuxième position axiale dans laquelle lesdits évidements espacés en spirale (509a) sont alignés avec lesdits alésages radiaux (512) espacés en spirale pour recevoir lesdits roulements à billes (510) ;
dans lequel le procédé comprend :
le positionnement d'une jante de roue (106) sur une bride de réception de roue (600) dudit ensemble d'entraînement (104) ;
l'enfoncement axial de ladite première extrémité de ladite tige de poussée 508 à l'intérieur dudit ensemble de broche (501) dans ladite deuxième position axiale pour aligner axialement lesdits évidements espacés en spirale (509a) sur ledit cylindre interne (509) avec lesdits alésages radiaux (512) espacés en spirale ;
le passage dudit ensemble de broche (501) à travers un alésage central de ladite jante de roue (106) et dans ledit alésage central (602) d'ensemble d'entraînement jusqu'à ce qu'une surface conique (506) dudit cône de roue annulaire (502) soit au moins à proximité d'un bord dudit alésage central de jante de roue ;
la libération de ladite première extrémité de ladite tige de poussée axiale (508) pour ramener ladite tige de poussée axiale (508) vers ladite première position axiale, le déplacement desdits évidements espacés en spirale (509a) sur ledit cylindre interne (509) à partir de l'alignement axial avec lesdits alésages radiaux (512) espacés en spirale, l'entraînement desdits roulements à billes (510) associés radialement vers l'extérieur à partir desdits alésages radiaux (512) espacés en spirale et en contact avec un canal (604) découpé en spirale à l'intérieur dudit alésage central d'ensemble d'entraînement (602) ; et
l'application d'un couple de rotation dans une première direction audit ensemble de poignée (503), ledit couple de rotation vissant ledit ensemble de broche (501) dans ledit alésage central (602) d'ensemble d'entraînement par mise en contact desdits roulements à billes (512) avec ledit canal (604) découpé en spirale, le serrage de ladite jante de roue (106) coaxialement entre ladite surface conique (506) dudit cône de roue annulaire (502) et ladite bride de réception de roue (600).

11. Procédé selon la revendication 10 dans lequel la libération de ladite jante de roue (106) d'entre ladite surface conique (506) dudit cône de roue annulaire (502) et ladite bride de réception de roue (600) comporte :
l'application d'un couple de rotation dans une deuxième direction audit ensemble de poignée (503), ledit couple de rotation dans ladite deuxième direction dévissant ledit ensemble de broche (501) dudit alésage central (602) d'ensemble d'entraînement par mise en contact desdits roulements à billes (510) avec ledit canal (604) découpé en spirale, le desserrage de ladite surface conique (506) de cône de roue annulaire de ladite jante de roue (106) ;
le déplacement axial de ladite première extrémité de ladite tige de poussée axiale (508) dans ledit ensemble de broche (501) dans ladite deuxième position axiale pour aligner axialement lesdits évidements espacés en spirale (509a) sur ledit cylindre interne (509) avec lesdits alésages radiaux (512) espacés en spirale, le retrait desdits roulements à billes (510) associés de la mise en contact avec ledit canal (604) découpé en spirale ; et
le retrait dudit ensemble de broche (501) de ladite jante de roue (106) et dudit alésage central (602) d'ensemble d'entraînement, libérant ladite jante de roue (106).

12. Procédé selon la revendication 10 dans lequel le déplacement axial de ladite première extrémité de ladite tige de poussée axiale (508) dans ledit ensemble de broche (501) dans ladite deuxième position axiale aligne axialement lesdits évidements espacés en spirale (509a) sur ledit cylindre interne (509) avec lesdits alésages radiaux (512) espacés en spirale, décalant lesdits roulements à billes (510) radialement vers l'intérieur desdits alésages radiaux espacés en spirale (510).
